Europäisches Patentamt

European Patent Office

Office européen des brevets

(11) Veröffentlichungsnummer: **0 195 452 B1**

(12) **EUROPÄISCHE PATENTSCHRIFT**

(45) Veröffentlichungstag der Patentschrift: 17.10.90

(51) Int. Cl.⁵: **F 16 H 47/04**

(21) Anmeldenummer: **86103829.7**

(22) Anmeldetag: **20.03.86**

(54) **Stufenlos einstellbares, leistungsverzweigendes Verbund-Lastschaltgetriebe mit Gruppenschaltungen.**

(30) Priorität: 21.03.85 DE 3510265
06.04.85 DE 3512523
19.02.86 DE 3605203

(43) Veröffentlichungstag der Anmeldung:
24.09.86 Patentblatt 86/39

(45) Bekanntmachung des Hinweises auf die
Patenterteilung:
17.10.90 Patentblatt 90/42

(84) Benannte Vertragsstaaten:
FR GB IT NL SE

(56) Entgegenhaltungen:
EP-A-0 081 696
DE-A-1 943 476
DE-A-2 716 960
DE-A-2 904 019
DE-C- 925 509
DE-C-1 124 369
DE-U-6 600 238
FR-A-2 373 000
US-A-2 269 215
US-A-3 580 107

(73) Patentinhaber: Jarchow, Friedrich, Prof. Dr.-Ing.
Am Ruhrstein 37
D-4300 Essen 1 (DE)

(72) Erfinder: Jarchow, Friedrich, Prof. Dr.-Ing.
Am Ruhrstein 37
D-4300 Essen 1 (DE)
Erfinder: Teuberge, Peter, Dipl.-Ing.
Waldring 63
D-4630 Bochum 1 (DE)

(74) Vertreter: Herrmann-Trentepohl, Werner, Dipl.-
Ing. et al
Schaeferstrasse 18
D-4690 Herne 1 (DE)

**Beschreibung**

Die Erfindung betrifft ein stufenlos einstellbares, leistungsverzweigendes Verbund-Lastschaltgetriebe mit Gruppenschaltungen nach dem Oberbegriff des Anspruches 1.

Solche Getriebe eignen sich für Fahrzeuge. Sie wirken wie stufenlose Getriebe mit einem relativ großen Verstellbereich und erlauben daher den Betrieb der Brennkraftmaschine entlang der minimalen Kraftstoffverbrauchskurve. Da sie außerdem verhältnismäßig gute Wirkungsgrade haben, läßt sich Kraftstoff einsparen. Da keine Zugkraftunterbrechung erfolgt, weisen sie auch ein überlegenes Beschleunigungsverhalten auf. Ihre automatische Betriebsweise trägt um Komfort des Fahrens bei.

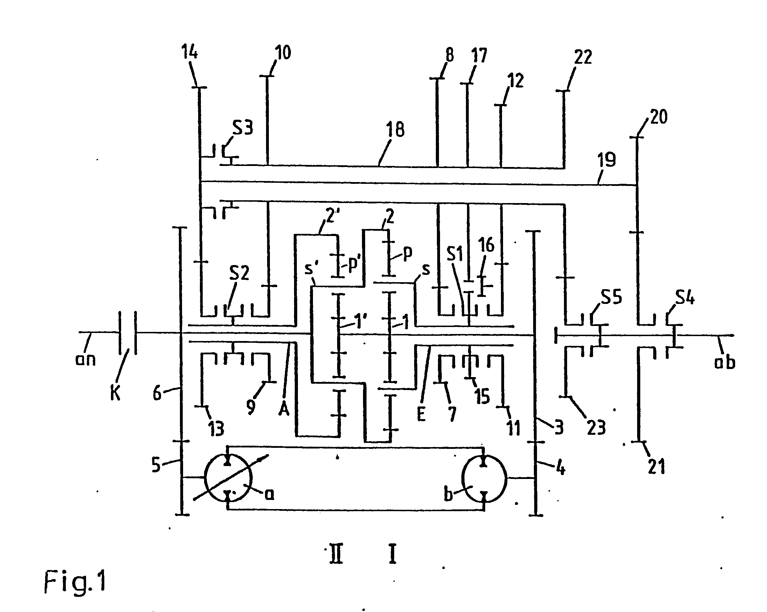

Die deutsche Patentschrift 31 47 447 C2 und die EP—A—0 081 696 zeigen mit Fig. 1 ein hydrostatischmechanisches Stellkoppelgetriebe mit eingangsseitiger Leistungsverzweigung. Die An- und Abtriebswellen 1, 2 liegen in dieser Figur koaxial. Die Stegwelle s stellt die Koppelwelle E und die Hohlradwelle 2'' die Koppelwelle A dar. Die Koppelwelle E treibt den ersten, dritten und R-Gang und die Koppelwelle A den zweiten und vierten Gang des nachgeordneten Schaltgetriebes. Soll nun die Leistung der Brennkraftmaschine erhöht und der Gesamtverstellbereich auch noch erweitert werden, wie das bei Nutzfahrzeugen im Vergleich zu Personenkraftwagen der Fall ist, muß entweder das Stellgetriebe, hier das hydrostatische Getriebe mit den Verdrängermaschinen a, b vergrößert oder aber die Anzahl der Gänge im Schaltgetriebe erhöht werden. Erstere Maßnahme führt zu größeren hydrostatischen Leistungsflüssen und damit auch zu schlechteren Wirkungsgraden und im allgemeinen auch zu mehr Gewicht und Bauraum. Die Erhöhung der Anzahl der Gänge ist daher von Vorteil. Nach Fig. 1 der erwähnten Schriften würde man bei einem 8-Gang-Schaltgetriebe zusätzlich acht Räder und zwei weitere Doppelkupplungen und bei einem 12-Gang-Schaltgetriebe sogar zusätzlich sechzehn Räder und vier weitere Doppelkupplungen benötigen.

Aus der DE—A—28 02 166 ist es bekannt, Zahnradwechselgetriebe in Gruppenbauweise auszuführen, womit bei vielen Gangstufen eine Reduktion des Bauaufwands, insbesondere der erforderlichen Zahnradpaare erzielbar ist. Dieses bekannte Getriebe weist ein Schaltgetriebe mit vier Vorwärts- und einem Rückwärtsgang auf, während für die Gruppenschaltung zwei Gruppengänge in Form eines Nachschaltgetriebes vorgesehen sind. An- und Abtriebswelle sind dabei koaxial angeordnet, die als Doppelkupplungen ausgebildeten Schaltkupplungen im Schaltgetriebe sind auf einer Vorgelegewelle angeordnet, während die Schaltkupplungen der zwei Gruppengänge auf der Abtriebswelle vorgesehen sind. Die zwei antriebsseitigen Zahnräder der Gruppengänge sind dabei fest auf der einzigen Vorgelegewelle des Schaltgetriebes angeordnet. Sowohl die Schaltkupplungen des Schaltgetriebes als auch die Schaltkupplungen der Gruppengänge können mit Synchronisiereinrichtungen versehen sein. Dieses bekannte Getriebe erlaubt kein Schalten unter Last und auch keine stufenlose Einstellung der Abtriebsdrehzahl.

Aus der DE—A—29 04 019 ist weiterhin ein stufenlos einstellbares, leistungsverzweigendes Verbund-Lastschaltgetriebe bekannt, das weitgehend der gattungsgemäßen Art entspricht. Dieses Getriebe weist sechs Vorwärts- und einen Rückwärtsgang auf. Für die sechs Vorwärtsgänge sind sechs Zahnradpaarungen mittels neun Zahnrädern vorgesehen, was—bei der Auslegung auf sechs Vorwärtsgänge—sowohl gegenüber dem in der DE—C—31 47 447 vorgeschlagenen, als auch gegenüber dem erfindungsgemäßen Konzept eine Verringerung um drei Zahnräder ermöglicht. Allerdings sind hierfür zehn Schaltkupplungen vorzusehen, wohingegen beim Konzept nach der DE—C—31 47 477 und der Erfindung jeweils nur sechs Schaltkupplungen vorzusehen wären.

Die Reduzierung der schaltbaren Zahnräder gegenüber der DE—C—31 47 447 ist dabei deshalb möglich, weil für den ersten und zweiten Gang schon eine Art Gruppenschaltung vorgesehen ist, und zwar in Form einer Vorschaltstufe, wobei für den ersten und zweiten Gang die Zahnräder des dritten bzw. vierten Ganges mitbenutzt werden.

Als Gruppengang für den ersten und zweiten Gang sind dabei die Zahnradpaare 47/41 bzw. 39/41 anzusehen, wobei die ineinandergreifenden Nabenhülsen der Zahnräder 41 und 42 im miteinander gekuppelten Zustand eine Art Vorgelegewelle bilden. Die im Sinne des Erfindungsgegenstandes andere Vorgelegewelle wird dabei jeweils durch die direkt (also ohne weitere Übersetzungsstufe, d.h. mit der Gruppenübersetzung i=1) mit der Ausgangswelle zu verbindenden Naben der Zahnräder 42, 48 gebildet. Weiterhin weist dieses Getriebe auch schon das Merkmal des Anspruches 7 auf, daß das stufenlose Stellgetriebe des Koppelgetriebes über Schaltkupplungen mit dem Zahnrädern des Koppelgetriebes verbindbar ist.

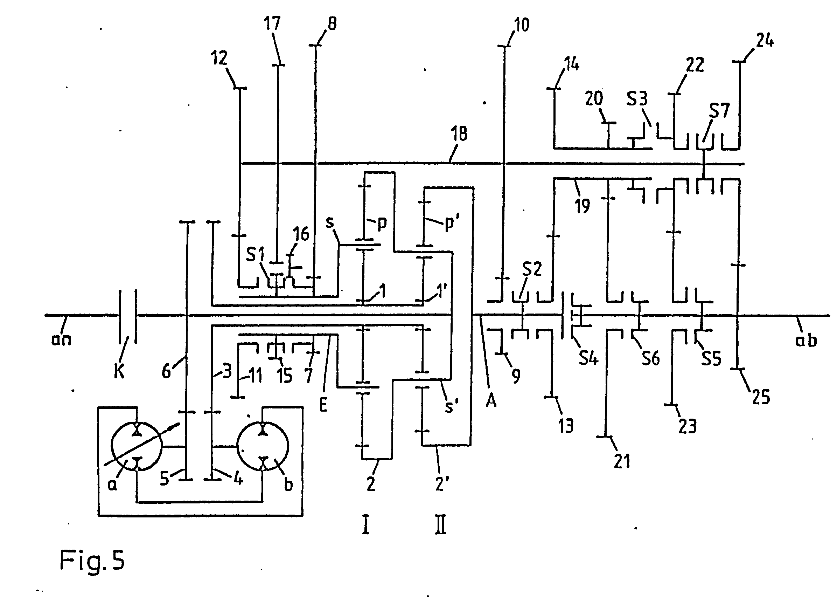

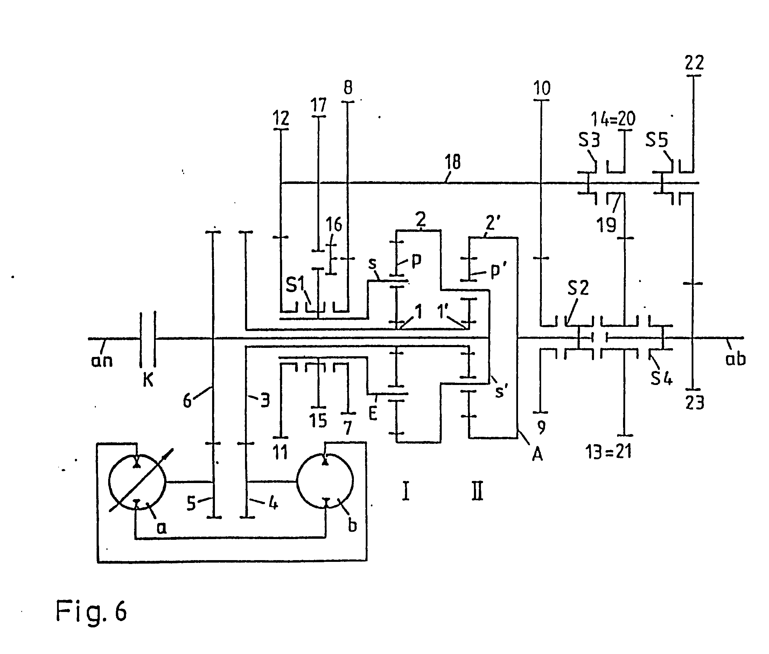

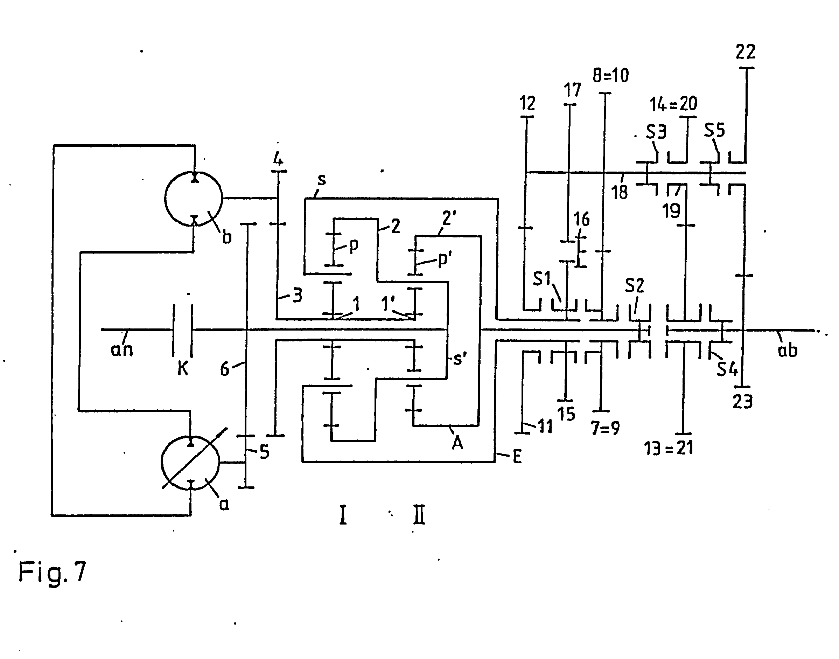

Aus Fig. 5 und 6 der DE—A—22 27 718 ist es bekannt, bei einem stufenlos einstellbaren, leistungsverzweigenden Verbund-Lastschaltgetriebe der gattungsgemäßen Art, aber ohne ein den Koppelwellen zugeordnetes Schaltgetriebe mit einer Ganggruppe, ein Reduktionsgetriebe in Plantenbauweise nachzuschalten, das für den Abtrieb der einen Koppelwelle (Hohlrad 34) der Wirkung nach wie zwie Gruppengänge arbeitet, denn diese eine Koppelwelle ist dort si mit dem Planetenreduktionsgetriebe verbindbar, daß in einem ersten Fahrbereich eine Reduktion der Abtriebswellendrehzahl gegenüber der Koppelwellendrehzahl erfolgt, während in einem dritten Fahrbereich das Reduktionsgetriebe im Blockumlauf geschaltet wird, wodurch die Abtriebswellendrehzahl gleich der Koppelwellendrehzahl wird. Diese Schaltungsweise entspricht z.B. der Schaltungsweise im vierten und achten Gang des Ausführungsbeispiels der Fig. 7 der Erfindung.

# EP 0 195 452 B1

Die Erfindung stellt sich nun die Aufgabe, den für die Erhöhung der Gangzahl festgestellten Aufwand zu reduzieren.

Diese Aufgabe wird erfindungsgemäß durch den kennzeichnenden Teil des ersten Anspruches gelöst.

In weiterer Ausgestaltung der Erfindung soll zur Verbesserung des Wirkungsgrades ein Gang, der häufig benutzt wird, direkt mit der Hauptabtriebswelle verbindbar sein. Der kennzeichnende Teil des zweiten Anspruches beschreibt die Lösung.

Der erste Anspruch sieht zwei Gruppengänge vor. Zur Realisierung einer besonders hohen Gangzahl beinhaltet die Erfindung auch die Anordnung von drei Gruppengängen. Der kennzeichnende Teil des dritten Anspruches gibt dazu die Lehre der Erfindung.

Der kennzeichnende Teil des vierten Anspruches zeigt, wie man in weiterer Ausgestaltung der Erfindung den Aufwand dadurch weiter reduziert, daß der erste Gruppengang auch als letzter Gang der Ganggruppe bei Betrieb mit dem zweiten Gruppengang benutzt wird.

Aufbauend auf den vierten Anspruch beinhaltet erfindungsgemäß der kennzeichnende Teil des fünften Anspruches eine weitere Verringerung des Aufwandes dadurch, daß für die ersten beiden Gänge der Ganggruppe die gleiche Stirnradstufe verwendet wird.

Für die Konzeptionen nach dem vierten und fünften Anspruch ergeben sich relativ geringe Gesamtübersetzungen. Die Differentialübersetzung der getriebenen Achse muß daher entsprechend größer werden, was zwei Stufen dazu erfordern kann.

Erfindungsgemäß zeigt der kennzeichnende Teil des sechsten Anspruches, wie man mit Hilfe einer Planetenradstufe mit relativ wenig Aufwand zu ausreichend großen Gesamtübersetzungen kommt.

Diese Planetenradstufe wird für den ersten Gruppengang als Übersetzungsstufe und für den zweiten Gruppengang als Kupplung geschaltet. Hier weist der letzte Gang der Ganggruppe bei jedem Gruppengang besonders gute Wirkungsgrade auf.

Beim Gangwechsel treiben beide Koppelwellen gemeinsam das Schaltgetriebe an, bevor die Verbindung zu einer Koppelwelle getrennt wird. In diesen Betriebspunkten ist das stufenlose Stellgetriebe des Koppelgetriebes nicht mehr für den Zwanglauf nötig. Der kennzeichnende Teil des Anspruches 7 zeigt, wie man in weiterer Ausgestaltung der Erfindungen Wirkungsgrad des Verbund-Lastschaltgetriebes dadurch steigert, daß man das stufenlose Stellgetriebe vom Koppelgetriebe trennt. In Betriebspunkte, bei denen Stellgetriebeteile stillstehen, können die damit verbundenen Koppelgetrieberäder über Schaltkupplungen mit dem Getriebegehäuse verbunden werden, über das das Drehmoment abgestützt wird.

Konzeptionen nach dem sechsten Anspruch haben keine Schaltelemente auf der zum zentralen Getriebestrang parallelen Vorgelegewelle 18. In weiterer Ausgestaltung der Erfindung führt man nach Anspruch 8 diese Vorgelegewelle zwei- oder mehrsträngig aus und ordnet sie in der Weise gleichmäßig um den zentralen Getriebestrang an, daß sich die Radialkomponenten aus den Verzahnungskräften aufheben.

Die mit der Erfindung erzielten Vorteile bestehen in einer Verringerung des Bauaufwandes. Bei der folgenden Gegenüberstellung betrachtet man eine Doppelkupplung als zwei Einzelkupplungen. Im Vergleich zu einer Konzeption analog zu Fig. 1 der eingangs erwähnten Schriften lassen sich nach dem ersten und zweiten Anspruch zwei Räder und zwei Einzelkupplungen, nach dem dritten Anspruch acht Räder und drei Einzelkupplungen, nach dem vierten Anspruch vier Räder und zwei Einzelkupplungen, nach dem fünften Anspruch sechs Räder und zwei Einzelkupplungen und schließlich nach dem sechsten und siebenten Anspruch acht Räder und zwei Einzelkupplungen, hier allerdings mit Mehraufwand für eine Planetenradstufe, einsparen. Der Mehraufwand an Zahnrädern nach dem achten Anspruch wird durch die Verringerung des Bauaufwandes infolge der Leistungsverzweigung und des Lagerungsaufwandes kompensiert. Bei allen Ansprüchen wirkt sich vorteilhaft aus, daß von den notwendigen Rädern vier für den Antrieb des hydrostatischen Stellgetriebes vorgesehen sind und daher relativ klein ausfallen. Beim vierten und fünften Anspruch muß allerdings das Differential zweistufig werden. Zu den weiteren Vorteilen gehören Wirkungsgradverbesserungen bei den Direktgängen.

Im folgenden wird die Erfindung anhand von Zeichnungen dargestellt und näher erläutert.

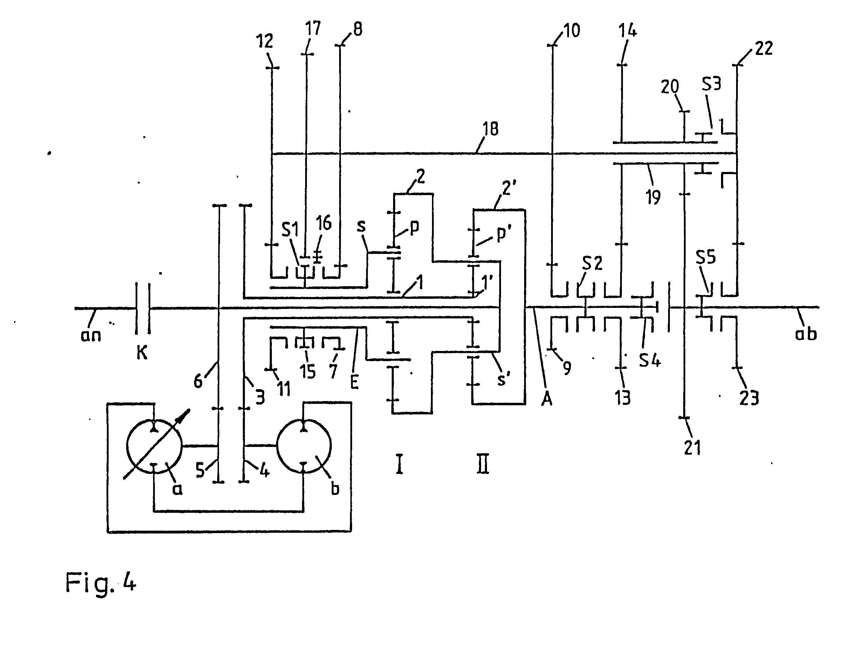

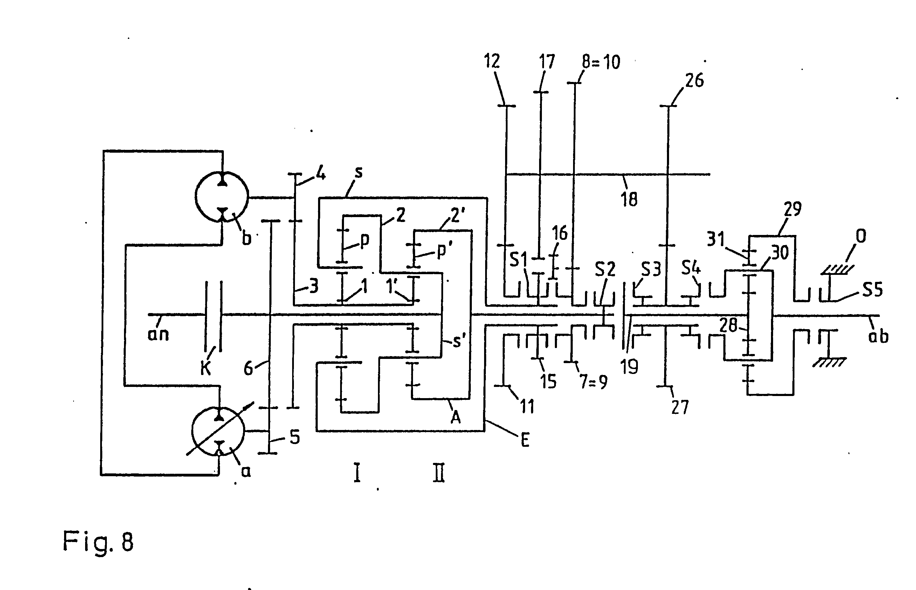

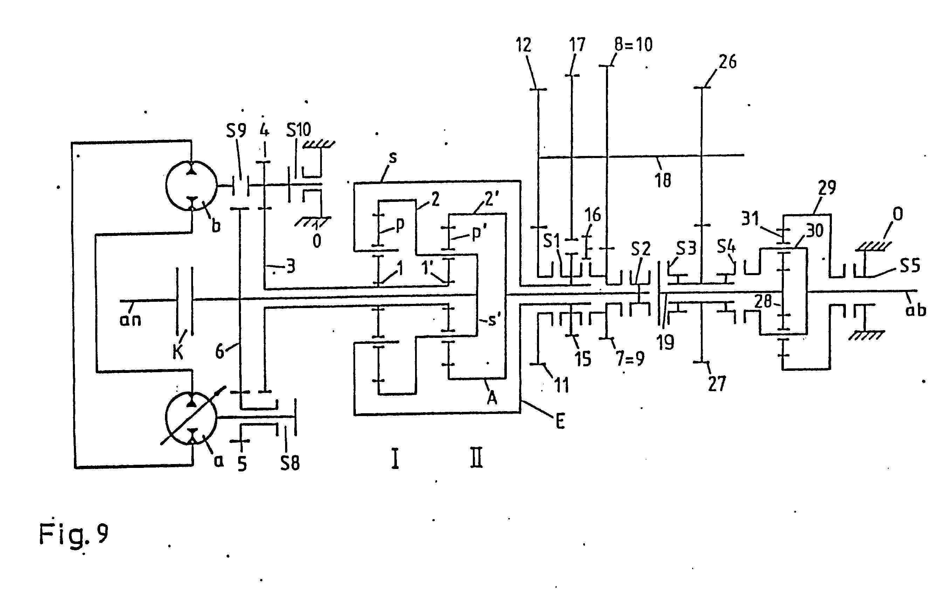

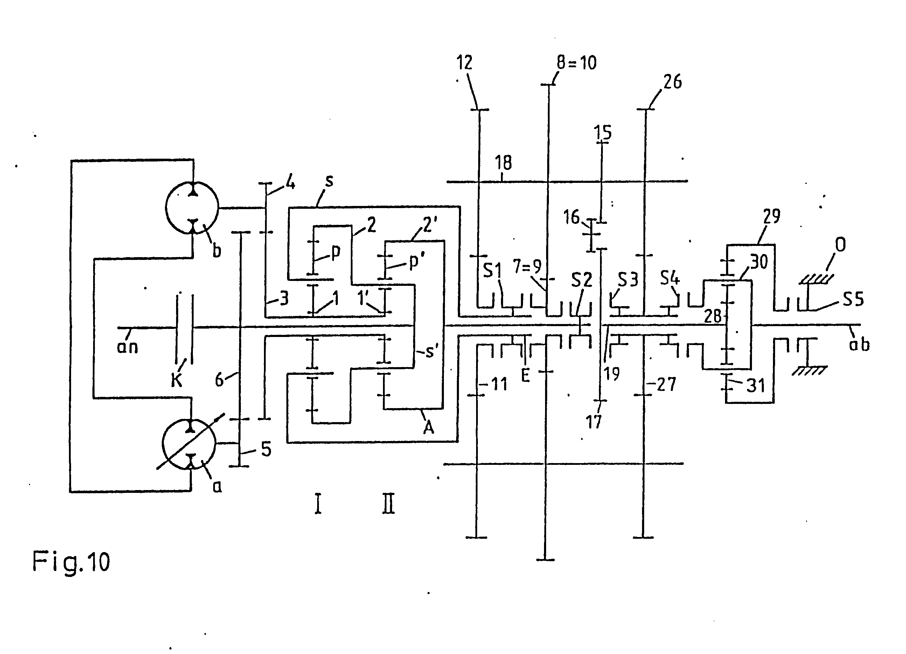

Die Figuren 1 bis 10 zeigen Ausführungsbeispiele des Getriebes gemäß den Ansprüchen 1 bis 8. Die Getriebe nach Fig. 1, 2 und 3 dienen zur Erläuterung des ersten Anspruches. Das Getriebe nach Fig. 4 betrifft den zweiten, das nach Fig. 5 den dritten, das nach Fig. 6 den vierten, das nach Fig. 7 den fünften, das nach Fig. 8 den sechsten, das nach Fig. 9 den siebenten und schließlich das nach Fig. 10 den achten Anspruch.

Für die gewählten Beispiele gelten die nachstehenden Beziehungen. Mit

| | |
|---|---|
| $i_{an-ab-max}$ | maximale Übersetzung zwischen Hauptantriebswelle an und Hauptantriebswelle ab |
| $i_{an-ab-min}$ | minimale Übersetzung zwischen Hauptantriebswelle an und Hauptabtriebswelle ab |
| $g$ | Anzahl der Gänge |
| $n_A$ | Drehzahl der Koppelwelle A |
| $n_E$ | Drehzahl der Koppelwelle E |
| $z_2$ | Hohlradzähnezahl der Stufe I |
| $z_1$ | Sonnenradzähnezahl der Stufe I |
| $z_{2'}$ | Hohlradzähnezahl der Stufe II |
| $z_{1'}$ | Sonnenradzähnezahl der Stufe II |

3

$P_h$        Hydrostatischer Leistungsfluß

$P_{an}$        Antriebsleistung

werden das Gesamtverhältnis

$$\varphi_g = \frac{i_{an-ab-max}}{i_{an-ab-min}}$$

das Einzelstellverhältnis

$$\varphi = q\sqrt{\varphi_g} = \frac{n_{E\,max}}{n_{E\,min}} = \frac{n_{A\,max}}{n_{A\,min}}$$

die Standübersetzung in der Planetenradstufe I

$$i_{oI} = \frac{z_2}{z_1} = -\frac{\varphi+1}{\varphi-1}$$

die Standübersetzung in der Planetenradstufe II

$$i_{oII} = \frac{z_{2'}}{z_{1'}} = -\frac{2}{\varphi+1} = i_{oI}+1$$

und der auf die Antriebsleistung bezogene maximale hydrostatische Leistungsfluß

$$\left| \frac{P_h}{P_{an}} \right|_{max} = \frac{\varphi-1}{2}$$

Fener folgen für die Übersetzung des 1., 2., 3. und 4. Ganges innerhalb der Ganggruppe

$$i_{1.} = i_{2.} = -\sqrt{\frac{i_{an-ab-max}}{\varphi}}$$

$$i_{3.} = i_{4.} = \frac{i_{1.}}{\varphi^2}$$

und für die Übersetzungen des 1. und 2. und gegebenenfalls 3. Gruppenganges

$$i_{G1.} = i_{1.}$$

$$i_{G2.} = \frac{i_{G1.}}{\varphi^4}$$

$$i_{G3.} = \frac{i_{G2.}}{\varphi^4}$$

Die für die Ausführungsbeispiele angegebenen Zahlenwerte stellen Nennwerte dar, die geringfügig zu verändern sind, um gerade Zähnezahlen zu erhalten und die Einbaubedingungen bei den Planetenradstufen einzuhalten.

Die bei der Beschreibung der Getriebe nach den Fig. 1 bis 10 dargestellten Schaltlogiken beziehen sich sowohl auf das Hochschalten, als auch auf das Herunterschalten.

In den Fig. 1 bis 10 bilden die Planetenradstufen I und II und das stufenlos einstellbare hydrostatische Getriebe mit der im Volumen verstellbaren Verdrängermaschine a und mit der Verdrängermaschine b, die konstantes Volumen aufweist, das Koppelgetriebe. Die Planetenradstufe I besteht aus dem Sonnenrad 1, dem Hohlrad 2, dem Steg s mit den Planetenrädern p und die Planetenradstufe II aus dem Sonnenrad 1', dem Hohlrad 2', dem Steg s' mit den Planetenrädern p'. Das Hohlrad 2 und der Steg s' bilden eine Einheit und lassen sich über die Anfahrkupplung K mit der Hauptantriebswelle(an) verbinden. Der Steg s stellt die Koppelwelle E und das Hohlrad 2' die Koppelwelle A dar. Die miteinander verbundenen Sonnenräder 1, 1' sind über die Zahnräder 3, 4 an die Verdrängermaschine b abgeschlossen. Die Zahnräder 5, 6 schließen die Verdrängermaschine a an die Hauptantriebswelle(an) an. Beim Durchschwenken der Verdrängermaschine a von ihrer Ausgangsextremlage in die andere Extremlage steigt die Drehzahl der Koppelwelle E und fällt die Drehzahl der Koppelwelle A. In der neuen Extremstellung laufen die Planetenradstufen I und II als Kupplung um. In der Ausgangsextremstellung ist das Verhältnis der Drehzahl der Koppelwelle A zu der der Koppelwelle E gleich $\varphi^2$. Innerhalb der Ganggruppe des nachgeordneten Schaltgetriebes treibt die Koppelwelle E den ersten und dritten Gang und die Koppelwelle A den zweiten und vierten Gang.

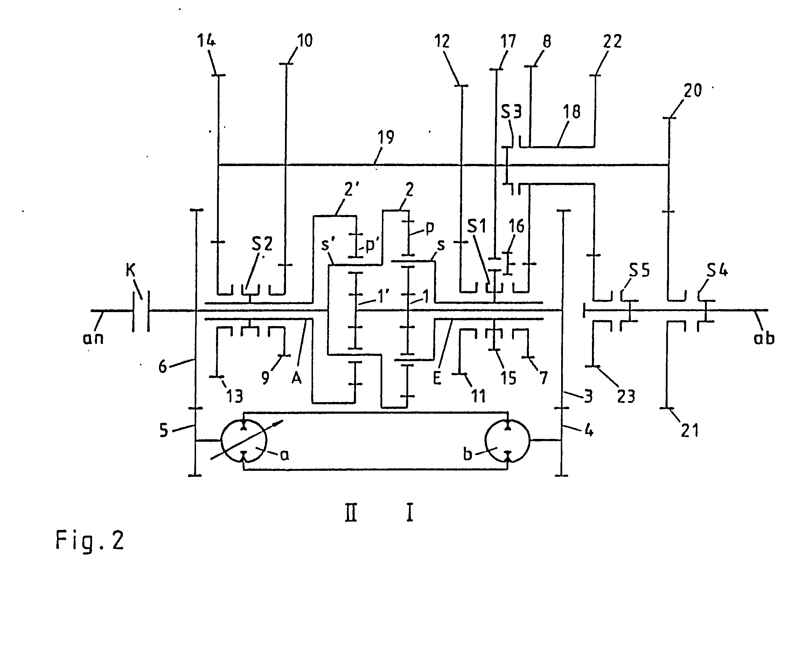

In Fig. 1 und 2 bilden die Räder 7, 8 den ersten Gang, die Räder 9, 10 den zweiten Gang, die Räder 11, 12 den dritten Gang, die Räder 13, 14 den vierten Gang und die Räder 15, 16, 17 den Rückwärtsgang innerhalb der Ganggruppe. Rad 16 ist ein Schieberad. Rad 15 sitzt fest auf der Schiebehülse der Doppel-Schaltzahnkupplung S1 für den ersten und dritten Gang. Die Doppel-Schaltzahnkupplung S2 steht für den zweiten und vierten Gang zur Verfügung. Die Schaltzahnkupplung mit Synchronisiereinrichtung S3 verbindet ide Vorgelegewellen 18 und 19. Die Vorgelegewelle 19 steht mit den Rändern 20, 21 des ersten Gruppenganges und die Vorgelegewelle 18 mit den Rändern 22, 23 des zweiten Gruppenganges in Verbindung. Die Schaltzahnkupplung mit Synchronisiereinrichtung S4 kann den ersten Gruppengang und die Schaltzahnkupplung mit Synchronisiereinrichtung S5 den zweiten Gruppengang mit der Hauptabtriebswelle (ab) verbinden.

Das Getriebe nach Fig. 2 weicht zu dem nach Fig. 1 dadurch ab, daß jetzt der erste und der dritte Gang in ihrer Lage vertauscht sind und sich nur die Räder 8 und 22 auf der Hohlwelle 18 befinden, während die Räder 10, 12, 14 und 17 auf der Vollwelle 19 sind. Die Hohlwelle baut dadurch vorteilhaft kurz. Alternativ besteht auch die Möglichkeit, die Räder 11, 12 und 15, 16, 17 zusätzlich auf der Hohlwelle 18 anzuordnen. Es befinden sich dann der erste Gang innerhalb der Ganggruppe auf der Vorgelegewelle 18 und der letzte Gang innerhalb der Ganggruppe auf der Vorgelegewelle 19, wobei die übrigen Gänge der Ganggruppe sich auf beide Vorgelegewellen verteilen.

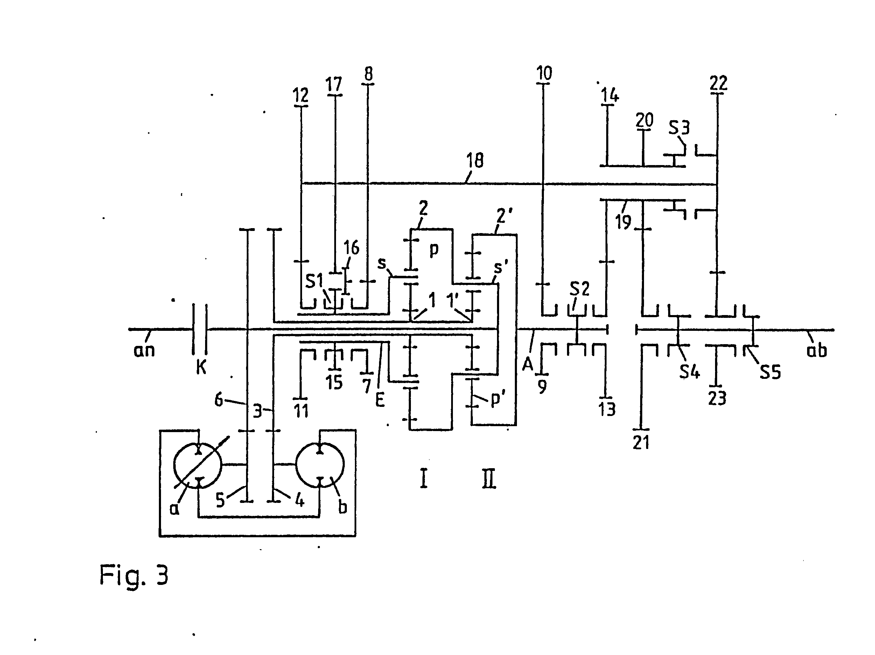

Eine kurze Hohlwelle hat auch das Getriebe nach Fig. 3, das sich von dem nach Fig. 1 durch vertauschte Anordnung der Planetenradstufen I und II unterscheidet.

Bei dem Getriebe nach Fig. 4 kann im Vergleich zu dem nach Fig. 3 die Schlatzahnkupplung S4 die Koppelwelle A direkt an die Hauptabtriebswelle (ab) anschließen.

Daten und Schaltlogik für die Getriebe nach Fig. 1 und Fig. 3

$i_{an\text{-}ab\text{-}max}=7 \qquad \varphi_g=14 \qquad \varphi=1,391 \qquad i_{oI}=-6,12 \qquad i_{oII}=-5,12 \qquad (P_h/P_{an})_{max}=0,2$

| Übersetzungen $i$ Gesamtgang | | Gangziffern $g$ Ganggruppe | | Gruppengang | | Schaltkupplung | | | | | | | | | |
| --- | --- | --- | --- | --- | --- | --- | --- | --- | --- | --- | --- | --- | --- | --- | --- |
| | | | | | | S1 | | S2 | | $S3^x$ | | $S4^x$ | | $S5^x$ | |
| $g$ | $i$ | $g$ | $i$ | $g$ | $i$ | Welle | Rad | Welle | Rad | Welle | Welle | Welle | Rad | Welle | Rad |
| 1. | 5,031 | 1. | −2,243 | | | E | 7 | | | 18 | 19 | ab | 21 | | |
| 2. | 5,031 | 2. | −2,243 | 1. | −2,243 | | | A | 9 | 18 | 19 | ab | 21 | | |
| 3. | 2,6 | 3. | −1,159 | | | E | 11 | | | 18 | 19 | ab | 21 | | |
| 4. | 2,6 | 4. | −1,159 | | | | | A | 13 | 18 ...... | 19 | ab | 21 | ab  - - - - | 23 |
| 5. | 1,344 | 1. | −2,243 | | | E | 7 | | | | | ab ...... | 21 | ab | 23 |
| 6. | 1,344 | 2. | −2,243 | 2. | −0,599 | | | A | 9 | | | | | ab | 23 |
| 7. | 0.694 | 3. | −1,159 | | | E | 11 | | | 18  - - - - | 19 | | | ab | 23 |
| 8. | 0,694 | 4. | −1,159 | | | | | A | 13 | 18 | 19 | | | ab | 23 |

$^x$Schaltzahnkupplung mit Synchronisiereinrichtung

- - - -Schaltung zum Ansynchronisieren freier Radstufen beim Hochschalten

......Schaltung zum Ansynchronosieren freier Radstufen beim Herunterschalten

Daten und Schaltlogik für die Getriebe nach Fig. 2

$$i_{an-ab-max}=7 \qquad \varphi_g=14 \qquad \varphi=1,391 \qquad i_{oI}=-6,12 \qquad i_{oII}=-5,12 \qquad (P_h/P_{an})_{max}=0,2$$

| Übersetzungen $i$ Gangziffern $g$ | | | | | | Schaltkupplung | | | | | | | | | |
|---|---|---|---|---|---|---|---|---|---|---|---|---|---|---|---|
| Gesamtgang | | Ganggruppe | | Gruppengang | | S1 | | S2 | | S3ˣ | | S4ˣ | | S5ˣ | |
| $g$ | $i$ | $g$ | $i$ | $g$ | $i$ | Welle | Rad | Welle | Rad | Welle | Welle | Welle | Rad | Welle | Rad |
| 1. | 5,031 | 1. | −2,243 | | | E | 7 | | | 18 | 19 | ab | 21 | | |
| 2. | 5,031 | 2. | −2,243 | | | | | A | 9 | 18 ...... | 19 | ab | 21 | | |
| | | | | 1. | −2,243 | | | | | | | | | | |
| 3. | 2,6 | 3. | −1,159 | | | E | 11 | | | | | ab | 21 | | |
| 4. | 2,6 | 4. | −1,159 | | | | | A | 13 | | | ab | 21 | ab − − − − | 23 |
| 5. | 1,344 | 1. | −2,243 | | | E | 7 | | | 18 − − − − | 19 | ab ...... | 21 | ab | 23 |
| 6. | 1,344 | 2. | −2,243 | | | | | A | 9 | 18 | 19 | | | ab | 23 |
| | | | | 2. | −0,599 | | | | | | | | | | |
| 7. | 0,694 | 3. | −1,159 | | | E | 11 | | | 18 | 19 | | | ab | 23 |
| 8. | 0,694 | 4. | −1,159 | | | | | A | 13 | 18 | 19 | | | ab | 23 |

ˣSchaltzahnkupplung mit Synchronisiereinrichtung
- - - -Schaltung zum Asynchronisieren freier Radstufen beim Hochschalten
......Schaltung zum Ansynchronosieren freier Radstufen beim Herunterschalten

EP 0 195 452 B1

Daten und Schaltlogik für das Getriebe nach Fig. 4

$i_{an\text{-}ab\text{-}max}=10$   $\varphi_g=14$   $\varphi=1,391$   $i_{ol}=-6,12$   $i_{oll}=-5,12$   $(P_h/P_{an})_{max}=0,2$

| Übersetzungen i / Gangziffern g | | | | | | Schaltkupplung | | | | | | | | | |
| Gesamtgang | | Ganggruppe | | Gruppengang | | S1 | | S2 | | S3ˣ | | S4 | | S5ˣ | |
| g | i | g | i | g | i | Welle | Rad | Welle | Rad | Welle | Welle | Welle | Welle | Welle | Rad |
|---|---|---|---|---|---|---|---|---|---|---|---|---|---|---|---|
| 1. | 7,241 | 1. | −2,691 | | | E | 7 | | | 18 | 19 | | | | |
| 2. | 7,241 | 2. | −2,691 | 1. | −2,691 | | | A | 9 | 18 | 19 | | | | |
| 3. | 3,743 | 3. | −1,391 | | | E | 11 | | | 18 | 19 | | | | |
| 4. | 3,743 | 4. | −1,391 | | | | | A | 13 | 18 ...... | 19 | | | ab - - - - | 23 |
| 5. | 1,935 | 1. | −2,691 | | | E | 7 | | | | | | | ab | 23 |
| 6. | 1,935 | 2. | −2,691 | 2. | −0,719 | | | A | 9 | | | | | ab | 23 |
| 7. | 1,0 | 3. | −1,391 | | | E | 11 | | | | | | | ab | 23 |
| 8. | 1,0 | 4. | −1,391 | | | | | A | 13 | | | A | ab | ab ...... | 23 |

ˣSchaltzahnkupplung mit Synchronisiereinrichtung
- - - -Schaltung zum Ansynchronisieren freier Radstufen beim Hochschalten
......Schaltung zum Ansynchronisieren freier Radstufen beim Herunterschalten

EP 0 195 452 B1

**EP 0 195 452 B1**

Das aus dem Getriebe nach Fig. 4 hervorgehende Getriebe nach Fig. 5 weist drei Gruppengänge auf. Der dritte Gruppengang besteht aus den Rädern 24, 25. Es sind im Vergleich zu Fig. 4 zusätzlich für den ersten Gruppengang die Schaltzahnkupplung mit Synchronisiereinrichtung S6 und für den zweiten und dritten Gruppengang die Doppel-Schaltzahnkupplung mit Synchronisiereinrichtung S7 erforderlich. $(P_h/P_{an})_{max}$ beträgt bei dem Getriebe nach Fig. 5 nur noch 0,123 im Vergleich zu 0,2 bie dem Getriebe nach Fig. 4.

Bei dem Getriebe nach Fig. 6 mit zwei Gruppengängen sind die Schaltzahnkupplungen S3, S4 und S5 mit Synchronisiereinrichtungen versehen. Der vierte Gang ist ein Direktgang. Beim achten Gang wird der erste Gruppengang als vierter Gang der Ganggruppe ausgenutzt. Dadurch sind im Vergleich zu Fig. 5 die Räder 13 und 21 sowie 14 und 20 identisch. Auf diese Weise entfallen zwei Räder.

Bei dem Getriebe nach Fig. 7 liegen die Koppelwellen A und E einseitig. Dadurch können im Vergleich zum Getriebe nach Fig. 6 die Räder 7 und 9 sowie 8 und 10 jeweils identisch sein. Auf diese Weise entfallen zwei weitere Räder. Für das Getriebe nach Fig. 7 treffen auch die Daten und Schaltlogik wie für das Getriebe nach Fig. 6 zu.

Das Getriebe nach Fig. 8 hat für den ersten und zweiten Gruppengang eine schaltbare Planetenradstufe, die aus dem Sonnenrad 28, dem Hohlrad 29, dem Steg 30 und den Planetenrädern 31 besteht. Die Schaltzahnkupplungen S3, S4 und S5 weisen Synchronisiereinrichtungen auf. Die Kupplung S5 kann das Hohlrad 29 mit dem Getriebegehäuse O verbinden. Die Räder 26, 27 besorgen den Anschluß der Vorgelegewelle 18 an die Gruppengänge. Der Steg 30 stellt die Hauptabriebswelle dar.

Das Getriebe nach Fig. 9 hat drei zusätzliche Schaltzahnkupplungen mit Synchronisiereinrichtungen S8, S9 und S10, die das hydrostatische Stellgetriebe mit den Koppelgetrieberädern 4 und 5 und das Rad 4 mit dem Gehäuse O verbindbar machen. Die Kupplungen S8 und S9 werden immer dann geöffnet, wenn beide Koppelwellen das Schaltgetriebe antreiben. Die hydrostatische Verdängermaschine b mit konst. Volumen steht in einem Betriebspunkt jeden Ganges still. In diesen Betriebszuständen koppelt die Schaltzahnkupplung S10 das Rad 4 an das Gehäuse O, bevor die Kupplungen S8 und S9 geöffnet werden. Das Getriebe nach Fig. 9 hat fünfzehn Betriebspunkte mit rein mechanischer Leistungsübertragung. Das stufenlose Stellgetriebe übernimmt die Funktion einer Schalthilfe zwischen diesen ausgezeichneten Betriebspunkten.

Das Getriebe nach Fig. 10 weist gegenüber dem Getriebe nach Fig. 8 eine zweisträngig ausgeführte Vorgelegewelle 18 auf. Bei zusätzlicher Geradverzahnung aller Räder wird der Aufwand für die Lagerungen im zentralen Getriebstrang minimal.

Für die Getriebe nach den Fig. 9 und 10 gelten gleiche Daten und Schaltlogik wie für das Getriebe nach Fig. 8.

9

EP 0 195 452 B1

## Daten und Schaltlogik für das Getriebe nach Fig. 5

$$i_{an\text{-}ab\text{-}max}=11,24 \qquad \varphi_g=14 \qquad \varphi=1,246 \qquad i_{oI}=-9,13 \qquad i_{oII}=-8,13 \qquad (P_h/P_{an})_{max}=0,123$$

| Gesamtgang g | i | Ganggruppe g | i | Gruppengang g | i | S1 Welle | S1 Rad | S2 Welle | S2 Rad | S3$^x$ Welle | S3$^x$ Rad | S4 Welle | S4 Welle | S5$^x$ Welle | S5$^x$ Rad | S6$^x$ Welle | S6$^x$ Rad | S7$^x$ Welle | S7$^x$ Rad |
|---|---|---|---|---|---|---|---|---|---|---|---|---|---|---|---|---|---|---|---|
| 1. | 9,018 | 1. | −3,003 | | | E | 7 | | | 19 | 22 | | | | | ab | 21 | 18 | 22 |
| 2. | 9,018 | 2. | −3,003 | 1. | −3,003 | | | A | 9 | 19 | 22 | | | | | ab | 21 | 18 | 22 |
| 3. | 5,808 | 3. | −1,934 | | | E | 11 | | | 19 | 22 | | | | | ab | 21 | 18 | 22 |
| 4. | 5,808 | 4. | −1,934 | | | | | A | 13 | 19 ...... | 22 | | | ab - - - - | 23 | ab | 21 | 18 | 22 |
| 5. | 3,742 | 1. | −3,003 | | | E | 7 | | | | | | | ab | 23 | ab ...... | 21 | 18 | 22 |
| 6. | 3,742 | 2. | −3,003 | 2. | −1,246 | | | A | 9 | | | | | ab | 23 | | | 18 | 22 |
| 7. | 2,410 | 3. | −1,934 | | | E | 11 | | | 19 - - - - | 22 | | | ab | 23 | | | 18 | 22 |
| 8. | 2,410 | 4. | −1,934 | | | | | A | 13 | 19 | 22 | | | ab | 23 | | | 18 ...... / 18 - - - - | 22 / 24 |
| 9. | 1,553 | 1. | −3,003 | | | E | 7 | | | 19 ...... | 22 | | | ab ...... | 23 | | | 18 | 24 |
| 10. | 1,553 | 2. | −3,003 | 3. | −0,517 | | | A | 9 | | | | | | | | | 18 | 24 |
| 11. | 1,0 | 3. | −1,934 | | | E | 11 | | | | | | | | | | | 18 | 24 |
| 12. | 1,0 | 4. | −1,934 | | | | | | | | | A | ab | | | | | 18 ...... | 24 |

$^x$Schaltzahnkupplung mit Synchronisiereinrichtung
- - - -Schaltung zum Ansynchronisieren freier Radstufen beim Hochschalten
......Schaltung zum Ansynchronisieren freier Radstufen beim Herunterschalten

Daten und Schaltlogik für die Getriebe nach Fig. 6 und Fig. 7

$i_{an-ab-max}=2{,}372$  $\varphi_g=10$  $\varphi=1{,}334$  $i_{ol}=-7{,}0$  $i_{oll}=-6{,}0$  $(P_h/P_{an})_{max}=0{,}167$

| Übersetzungen $i$ Gangziffern $g$ | | | Schaltkupplung | | | | | | | | |
| Gesamtgang $g$ $i$ | Ganggruppe $g$ $i$ | Gruppengang $g$ $i$ | S1 Welle | Rad | S2 Welle | Rad | S3x Welle | Rad | S4x Welle | Rad | S5x Welle | Rad |
|---|---|---|---|---|---|---|---|---|---|---|---|---|
| 1. 1,778 | 1. −1,0 | | E | 7 | | | 18 | 20 | ab | 21 | | |
| 2. 1,778 | 2. −1,0 | 1. −1,778 | | | A | 9 | 18 | 20 | ab | 21 | | |
| 3. 1,0 | 3. −0,562 | | E | 11 | | | 18 | 20 | ab | 21 | | |
| 4. 1,0 | 4. −0,562 | | | | A | 21 | 18 ...... | 20 | ab | 21 | 18 - - - - | 22 |
| 5. 0,562 | 1. −1,0 | | E | 7 | | | | | ab ...... | 21 | 18 | 22 |
| 6. 0,562 | 2. −1,0 | 2. −0,562 | | | A | 9 | | | | | 18 | 22 |
| 7. 0,316 | 3. −0,562 | | E | 11 | | | | | ab - - - - | 21 | 18 | 22 |
| 8. 0,316 | 4. −0,562 | | | | A | 21 | | | ab | 21 | 18 ...... | 22 |

xSchaltzahnkupplung mit Synchronisiereinrichtung
- - - -Schaltung zum Ansynchronisieren freier Radstufen beim Hochschalten
......Schaltung zum Ansynchronisieren freier Radstufen beim Herunterschalten

Daten und Schaltlogik für die Getriebe nach den Fig. 8, 9 und 10

$$i_{an\text{-}ab\text{-}max}=10,04 \qquad \varphi_g=14 \qquad \varphi=1,391 \qquad i_{oI}=-6,12 \qquad i_{oII}=-5,12 \qquad (P_h/P_{an})_{max}=0,2$$

| Übersetzungen $i$ Gangziffern $g$ | | | Schaltkupplung | | | | | | | | | |
|---|---|---|---|---|---|---|---|---|---|---|---|---|
| Gesamtgang | Ganggruppe | Gruppengang | S1 | | S2 | | S3$^x$ | | S4$^x$ | | S5$^x$ | |
| $g$ $\quad$ $i$ | $g$ $\quad$ $i$ | $g$ $\quad$ $i$ | Welle | Rad | Welle | Rad | Rad | Welle | Welle | Rad | Geh. | Rad |
| 1. $\quad$ 7,218 | 1. $\quad$ −1,93 | | E | 7 | | | 27 | 19 | | | 0 | 29 |
| 2. $\quad$ 7,218 | 2. $\quad$ −1,93 | 1. $\quad$ −3,74 | | | A | 7 | 27 | 19 | | | 0 | 29 |
| 3. $\quad$ 3,74 | 3. $\quad$ −1,0 | | E | 11 | | | 27 | 19 | | | 0 | 29 |
| 4. $\quad$ 3,74 | 4. $\quad$ −1,0 | | | | A | 19 | 27 ...... | 19 | ab ---- | 27 | 0 | 29 |
| 5. $\quad$ 1,93 | 1. $\quad$ −1,93 | | E | 7 | | | 27 ---- | 19 | ab | 27 | 0 ...... | 29 |
| 6. $\quad$ 1,93 | 2. $\quad$ −1,93 | 2. $\quad$ −1,0 | | | A | 7 | 27 | 19 | ab | 27 | | |
| 7. $\quad$ 1,0 | 3. $\quad$ −1,0 | | E | 11 | | | 27 | 19 | ab | 27 | | |
| 8. $\quad$ 1,0 | 4. $\quad$ −1,0 | | | | A | 19 | 27 | 19 | ab | 27 | | |

$^x$Schaltzahnkupplung mit Synchronisiereinrichtung
- - - -Schaltung zum Ansynchronisieren freier Radstufen beim Hochschalten
......Schaltung zum Ansynchronisieren freier Radstufen beim Herunterschalten

# EP 0 195 452 B1

**Patentansprüche**

1. Stufenlos einstellbares, leistungsverzweigendes Verbund-Lastschaltgetriebe mit Gruppenschaltungen, bestehend aus zwei Teilgetrieben, wobei das eine Teilgetriebe ein stufenlos einstellbares, leistungsverzweigendes Koppelgetriebe ist, dessen eine Welle Hauptantriebswelle (an) ist, und das zwei koaxiale Koppelwellen (A, E) hat, von denen beim Verstellen eines stufenlosen Stellgetriebes (a, b) von einer Extremübersetzung zur anderen, bei der beide Koppelwellen synchron laufen, die eine (E) stetig schneller und die andere (A) stetig langsamer läuft bzw. umgekehrt bei entgegengesetzter Verstellung, wobei das andere Teilgetriebe ein Schaltgetriebe mit einer Ganggruppe und mehreren Gruppengängen ist, das alternativ von einer der beiden Koppelwellen (A, E) angetrieben wird und das eine Hauptabtriebswelle (ab) hat, die in der Weise über verschiedene Übersetzungen mit der jeweils antreibenden Koppelwelle verbindbar ist, daß sich in einem weiten Bereich eine stufenlose Übersetzung zwischen der Hauptantriebswelle (an) und der Hauptabtriebswelle (ab) einstellen läßt und daß bei einem Gangwechsel Schaltkupplungen ohne Zugkraftunterbrechung lastfrei und bei synchronen Drehzahlen schalten, dadurch gekennzeichnet, daß für den letzten Gang innerhalb der Ganggruppe eine Vorgelegewelle (19) und für den ersten Gang innerhalb der Ganggruppe eine andere Vorgelegewelle (18) vorhanden ist, und daß die übrigen Gänge der Ganggruppe entweder mit der Vergelegewelle (18) oder der Vorgelegewelle (19) in Verbindung stehen oder aber ein Teil der übrigen Gänge mit der Vorgelegewelle (18) und der andere Teil der übrigen Gänge mit der Vorgelegewelle (19) in Verbindung steht, wobei diese beiden Vorgelegewellen (18, 19) über eine Schaltkupplung (S3) miteinander verbindbar sind und wobei diese Vorgelegewellen Antriebswellen verschiedener Gruppengänge darstellen, und daß in bekannter Weise diejenigen Schaltkupplungen Synchronisiereinrichtungen aufweisen, die die jeweils leerlaufende Rädergruppe ansynchronisieren müssen.

2. Stufenlos einstellbares, leistungsverzweigendes Verbund-Lastschaltgetriebe mit Gruppenschaltungen nach Anspruch 1, dadurch gekennzeichnet, daß ein Gang der Ganggruppe und ein Gruppengang zueinander reziproke Übersetzungen aufweisen und daß die Koppelwelle für den betroffenen Gang der Gangruppe mittels Schaltkupplungen direkt mit der Hauptabtriebswelle verbindbar ist.

3. Stufenlos einstellbares, leistungsverzweigendes Verbund-Lastschaltgetriebe mit Gruppenschaltungen nach den Ansprüchen 1 und 2, dadurch gekennzeichnet, daß drei Gruppengänge vorgesehen sind und daß eine Vorgelegewelle mittels Schaltkupplungen als Antriebswelle sowohl mit dem zweiten als auch mit dem dritten Gruppengang verbindbar ist.

4. Stufenlos einstellbares, leistungsverzweigendes Verbund-Lastschaltgetriebe mit Gruppenschaltungen nach den Ansprüchen 1 und 2, dadurch gekennzeichnet, daß der letzte Gang der Ganggruppe beim ersten Gruppengang ein Direktgang ist, wobei die zugehörige Koppelwelle direkt über Schaltkupplungen mit der Hauptabtriebswelle verbindbar ist und wobei bei Betrieb mit dem zweiten Gruppengang die Räder des ersten Gruppenganges als letzter Gang innerhalb der Gangruppe ausgenutzt werden.

5. Stufenlos einstellbares, leistungsverzweigendes Verbund-Lastschaltgetriebe mit Gruppenschaltungen nach den Ansprüche 1, 2 und 4, dadurch gekennzeichnet, daß beide Koppelwellen das Koppelgetriebes auf der Seite der Hauptabtriebswelle liegen und daß für den ersten und zweiten Gang der Ganggruppe die gleiche Zahnradstufe Verwendung findet.

6. Stufenlos einstellbares, leistungsverzweigendes Verbund-Lastschaltgetriebe mit Gruppenschaltungen nach den Ansprüche 1, 2, 4 und 5, dadurch gekennzeichnet, daß der letzte Gang der Ganggruppe ein Direktgang ist, daß die anderen Gänge der Ganggruppe zu diesem letzten Gang über eine Stirnradstufe (26, 27) rückgeführt werden und daß eine Planetenradstufe mit der Stegwelle (30) als hauptabtriebswelle (ab) die beiden Gruppengänge bildet, und zwar den ersten Gruppengang, wenn das Hohlrad (29) über eine Schaltkupplung (S5) mit dem Gehäuse (O) verbunden ist und die eine Vorgelegewelle (19) das Sonnenrad (28) antreibt und zwar ferner den zweiten Gruppengang, wenn die Stegwelle (30) als Hauptabtriebswelle über Schaltkupplungen angetrieben wird, wobei im Direktgang beim zweiten Gruppengang das Hohlrad (19) freigesetzt sein muß.

7. Stufenlos einstellbares, leistungsverzweigendes Verbund-Lastschaltgetriebe mit Gruppenschaltungen nach Anspruch 1, dadurch gekennzeichnet, daß das stufenlose Stellgetriebe (a, b) des Koppelgetriebes über Schaltkupplungen (S8, S9) mit den Zahnrädern (4, 5) des Koppelgetriebes verbindbar ist und daß diese Zahnräder bei Stillstand über Zahnkupplungen (S10) mit dem Gehäuse (O) verbindbar sind.

8. Stufenlos einstellbares, leistungsverzweigendes Verbund-Lastschaltgetriebe mit Gruppenschaltungen nach den Ansprüchen 1, 2, 4, 5 und 6, dadurch gekennzeichnet, daß die zum zentralen Getriebstrang parallele Vorgelegewelle (18) zwei- oder mehrsträngig ausgeführt und gleichmäßig um den zentralen Getriebestrang angeordnet ist.

**Revendications**

1. Transmission hybride commutable sous charge, réglable continûment à division de puissance et commande par groupes-relais, comportant deux parties, dont l'une est constituée par un mécanisme de

13

EP 0 195 452 B1

transmission à variation continue et à division de puissance ayant comme arbre d'entrée l'arbre d'entrée (ent.) du système, et comportant deux arbres internes liaison (A, E), qui sont coaxiaux et dont l'un (E) tourne constamment plus vite alors que l'autre tourne constamment plus lentement, lorsqu'un dispositif de transmission associé, à variation continue, passe d'une position extrême à une autre position pour laquelle les deux arbres de liaison tournent en synchronisme, les régimes de rotation des deux arbres étant inversés pour une variation en sens inverse, l'autre partie du système étant constituée par ne boîte mécanique à plusieurs vitesses sélectivement associée à une boîte de démultiplication à plusieurs positions, cette seconde partie du système étant entraînée alternativement par l'un ou l'autre des arbres internes de liaison (A, E), et comportant comme arbre de sortie l'arbre de sortie principal (sort.) du système, cet arbre de sortie pouvant ainsi être associé suivant divers rapports de démultiplication avec celui des arbres internes de liaison qui est en service à un moment donné, de manière à réaliser une démultiplication en variation continue sur une plage étendue, entre l'arbre principal d'entrée (ent.) et l'arbre principal de sortie (sort.), et à assurer les manoeuvres de changement de vitesse en faisant fonctionner en synchronisme des organes d'accouplement commandés, sans charge et sans interruption de l'effort moteur, caractérisé en ce qu'il comporte pour la dernière position de la boîte de vitesses un arbre de réduction (19), avec un autre arbre de réduction (18) pour la première position de la boîte de vitesses, les autres positions de celle-ci étant associées soit avec le second arbre de réduction (18) soit avec le premier (19), chaque arbre de réduction (18, 19) pouvant aussi être associé à une partie des autres positions de la boîte de vitesses principale, les deux arbres de réduction (18, 19) pouvant être reliés l'un à l'autre par un organe d'accouplement à manoeuvre commandée (S3), et ces deux arbres constituant des arbres d'entraînement pour diverses gammes de démultiplication des vitesses groupées dans la boîte principale, chacun des organes d'accouplement à manoeuvre commandée comportant, d'une manière connue, un dispositif de synchronisation pour synchroniser les trains d'engrenages libres correspondants.

2. Transmission hybride commutable sous charge, réglable continûment à division de puissance et commande par groupes-relais selon la revendication 1, caractérisée en ce qu'une position de la boîte de vitesses principale et une position de la gamme de démultiplication de la boîte auxiliaire présentent des rapports de démultiplication réciproque, et en ce que l'arbre de liaison interne correspondant à la position précitée de la boîte principale peut être relié directement à l'arbre principal de sortie au moyen d'organes d'accouplement à manoeuvre commandée.

3. Transmission hybride commutable sous charge, réglable continûment à division de puissance et commande par groupes-relais selon l'une des revendications 1 et 2, caractérisée en ce que la boîte auxiliaire comporte trois rapports de démultiplication, des organes d'accouplement à manoeuvre commandée étant prévus pour relier un arbre de réduction de manière sélective avec la deuxième position ou avec la troisième position de la boîte de démultiplication, l'arbre de réduction jouant alors le rôle d'arbre d'entraînement.

4. Transmission hybride commutable sous charge, réglable continûment à division de puissance et commande par groupes-relais selon l'une des revendications 1 et 2, caractérisée en ce que la dernière position de la boîte de vitesses est une position de prise directe lorsqu'on utilise le premier rapport de la boîte de démultiplication, l'arbre de liaison interne correspondant pouvant être raccordé directement à l'arbre principal de sortie par des organes d'accouplement à manoeuvre commandée, et les pignons de la première position de la boîte de démultiplication étant utilisés pour réaliser la dernière position de la gamme de la boîte de vitesses, lorsque le système fonctionne sur la deuxième position de la boîte de démultiplication.

5. Transmission hybride commutable sous charge, réglable continûment à division de puissance et commande par groupes-relais selon l'une des revendications 1, 2 et 4, caractérisée en ce que les deux arbres de liaison internes du mécanisme sont disposés latéralement par raport à l'arbre principal de sortie, et en ce qu'on utilise le même train de pignons pour la première position et pour la deuxième position de la gamme de la boîte de vitesses.

6. Transmission hybride commutable sous charge, réglable continûment à division de puissance et commande par groupes-relais selon l'une des revendications 1, 2, 4 et 5, caractérisée en ce que la dernière position de la gamme de la boîte de vitesses est une position de prise directe, en ce que les autres positions de cette boîte sont renvoyées à cette première position par un train d'engrenages comportant deux roues à denture droite (26, 27), et en ce que les deux rapports de démultiplication de la boîte auxiliaire sont réalisés au moyen d'un train d'engrenages planétaires dont la cage est solidaire d'un arbre (30) constituant l'arbre principal (sort.) du système, le premier rapport de démultiplication étant réalisé lorsque la roue à denture intérieure (29) est solidarisée avec le carter (O) par un organe d'accouplement à manoeuvre commandée (S5), l'un des arbres de réduction (19) entraînant alors le pignon solaire (28), et le deuxième rapport de démultiplication étant réalisé lorsque l'arbre de sortie de la cage (30), jouant le rôle d'arbre de sortie principale du système, est entraîné par l'intermédiaire d'organes d'accouplement à manoeuvre commandée, la roue à denture intérieure (19) devant être libérée lorsque le système fonctionne en position de prise directe suivant le deuxième rapport de démultiplication.

7. Transmission hybride commutable sous charge, réglable continûment à division de puissance et commande par groupes-relais selon la revendication 1, caractérisée en ce qu'il comporte des organes d'accouplement à manoeuvre commandée (S8, S9) pour relier sélectivement le dispositif de transmission associé à variation continue (a, b) avec les pignons (4, 5) du mécanisme de liaison, des organes

14

d'accouplements à dentures (S10) étant en outre prévus pour relier ces pignons avec le carter (O) lorsqu'ils doivent être immobilisés.

8. Transmission hybride commutable sous charge, réglable continûment à division de puissance et commande par groupes-relais selon l'une des revendications 1, 2, 4, 5 et 6, caractérisée en ce qu'il comporte un arbre de réduction (18) parallèle à l'axe du mécanisme central, cet arbre étant réalisé en deux parties au moins, avec une répartition régulière autour de l'axe du mécanisme central.

**Claims**

1. Continuously variable compound power shift transmission of the range-speed type with multiple power path, consisting of two dividing gearings, of which one dividing gearing is a continuously variable linkage with multiple power path, whose one shaft is the main input drive shaft (in) and which has two coaxial coupling shafts (A, E) of which upon adjustment of a continuous adjusting gear (a, b) from one extreme ratio to the other, upon which the two coupling shafts run synchronously, one (E) always run faster and the other (A) always run more slowly or vice versa with opposite adjustment, and of which the other dividing gearing comprises a changeover gear with a group of gears and a multiple gear series, which is driven alternately by one of the two coupling shafts (A, E) and which has a main output drive shaft (out) which is connectable with the respective driving coupling shaft via various ratios such that in a wide range a continuous ratio can be set between the main input drive shaft (in) and the main output drive shaft (out) and that upon a gear shift the clutches change without interruption in power, free of load and with synchronous speeds, characterised in that for the last gear within the group of gears an intermediate shaft (19) and for the first gear within the group of groups another intermediate shaft (18) is provided and that the remaining gears of the group of gears are connected either to the intermediate shaft (18) or to the intermediate shaft (19) or some of the remaining gears are connected to the intermediate shaft (18) and the other remaining gears are connected to the intermediate shaft (19) whereby these two intermediate shafts (18, 19) can be connected to each other via a clutch (S3) and whereby these intermediate shafts are drive shafts of various gear series and that in known manner these have synchronising devices which must synchronise the respective idling gear groups.

2. Continuously variable compound power shift transmission of the range-speed type with multiple power path according to Claim 1, characterised in that one gear of the group of gears and a gear series have ratios reciprocal to each other and that the coupling shaft for the relevant gear of the group of gears is directly connectable to the main output drive shaft by means of clutches.

3. Continuously variable compound power shift transmission of the range-speed type with multiple power path according to Claims 1 and 2, characterised in that three gear series are provided and that an intermediate shaft is connectable by means of clutches as drive shaft to the second as well as to the third gear series.

4. A continuously variable compound power shift transmission of the range-speed type with multiple power path according to Claims 1 and 2, characterised in that the last gear of the group of gears in the first gear series is a direct gear, whereby the associated coupling shaft can be directly connected to the main output drive shaft via clutches and whereby during operation with the second gear series the gears of the first gear series are used as last gear within the group of gears.

5. Continuously variable compound power shift transmission of the range-speed type with multiple power path according to Claims 1, 2 and 4, characterised in that both coupling shafts of the linkage lie on the side of the main output drive shaft and that for the first and second gear of the group of gears the same cog gear is used.

6. Continuously variable compound power shift transmission of the range-speed type with multiple power path according to Claims 1, 2, 4 and 5, characterised in that the last gear of the group of gears is a direct gear, that the other gears of the group of gears are led back to this last gear via a spur gear stage (26, 27) and that a planet gear stage with the frame shaft (30) as the main output drive shaft (out) forms the two series of gears, namely the first series of gears when the ring gear (29) is connected via a clutch (S5) to the housing (O) and the one intermediate shaft (19) drives the sun gear (28) and also the second series of gears when the frame shaft (30) is driven as the main output drive shaft via clutches whereby in the direct gear in the second series of gears the ring gear (19) must be released.

7. Continuously variable compound power shift transmission of the range-speed type with multiple power path according to Claim 1, characterised in that the continuous adjusting gear (a, b) of the linkage is connectable to the cog gears (4, 5) of the coupling gearing via clutches (S8, S9) and that these cog gears when stationary are connectable with the housing (O) via toothed gear couplings (S10).

8. Continuously variable compound power shift transmission of the range-speed type with multiple power path according to the Claims 1, 2, 4, 5 and 6, characterised in that the intermediate shaft (18) parallel to the central transmission line is constructed in two or more lines and arranged equally about the central transmission line.

Fig.1

Fig. 2

Fig. 3

EP 0 195 452 B1

Fig. 4

EP 0 195 452 B1

Fig.5

Fig. 6

EP 0 195 452 B1

Fig. 7

EP 0 195 452 B1

Fig. 8

EP 0 195 452 B1

Fig. 9

Fig.10

EP 0 195 452 B1